# EUROPEAN PATENT APPLICATION

(11) **EP 4 768 697 A1**
(43) Date of publication of application: **01.07.2026**
(21) Application number: 25227457.6
(22) Date of filing: 29.12.2025
(51) Int. Cl.: F01D 25/02, F02C 7/047, F04D 29/58, F01D 21/12, F02C 7/045, F01D 5/06

(54) **ANTI-ICING DEVICE, AND COMPRESSOR AND GAS TURBINE INCLUDING SAME**

(30) Priority: 30.12.2024 KR 20240200198
(71) Applicant: Doosan Enerbility Co., Ltd., Seongsan-gu Changwon-si, Gyeongsangnam-do 51711 (KR)
(72) Inventor: CHOI, Jae Woo, 51711 Changwon-si, (KR)
(74) Representative: Ter Meer Steinmeister & Partner

(57) **Abstract**

Proposed is an anti-icing device, and a compressor and a gas turbine including the same, which is configured to prevent external air introduced into the compressor from freezing and causing damage to an inner portion of the gas turbine, and the anti-icing device includes an inlet guide vane installed behind an intake through which external air is introduced, and controlling a flow of the introduced external air, and a heating unit installed at the inlet guide vane and configured to heat the inlet guide vane such that the external air is prevented from condensing.

## Description

### BACKGROUND OF THE INVENTION

### Field of the Invention

The present disclosure relates to an anti-icing device, and a compressor and a gas turbine including the same, the anti-icing device preventing external air introduced into the compressor from freezing and resulting damage to an inner portion of the gas turbine.

### Description of the Related Art

A turbine is a mechanical device that utilizes a flow of compressible fluid, such as steam or gas, to generate rotational force through impulse or reaction, and includes a steam turbine that utilizes steam and a gas turbine that utilizes high temperature combustion gas.

Among them, the gas turbine is primarily composed of a compressor, a combustor, and a turbine. The compressor is equipped with an air inlet to introduce air, and in a compressor housing, a plurality of compressor vanes and compressor blades are alternately arranged.

The combustor supplies fuel to compressed air from the compressor and burns it with a burner, thereby generating high temperature and high pressure combustion gas.

The turbine includes the plurality of turbine vanes and the turbine blades that are alternately arranged in a turbine casing. Furthermore, a rotor is arranged to pass through the central portions of the compressor, the combustor, the turbine, and an exhaust chamber.

The rotor is rotatably supported at both ends thereof by bearings. Furthermore, a plurality of discs is fixed to the rotor with each blade connected thereto, and a drive shaft of a generator, etc. is connected to an end of the exhaust chamber.

The gas turbine, which does not include reciprocating motion devices like pistons in four-stroke engines, has no friction points, such as those between the piston and the cylinder, resulting in extremely low lubricant consumption, significantly reduced vibration amplitude, which is characteristic of the reciprocating motion devices, and enabling high-speed operation.

To briefly describe the operation of the gas turbine, air compressed in the compressor is mixed with fuel and burned to produce high temperature combustion gas, which is then injected toward the turbine. The injected combustion gas generates rotational force as it passes through the turbine vanes and turbine blades, thereby rotating the rotor.

### SUMMARY OF THE INVENTION

An objective of the present disclosure is to an anti-icing device, and a compressor and a gas turbine including the same, the anti-icing device preventing external air introduced into the compressor from freezing and resulting damage to an inner portion of the gas turbine.

According to an embodiment of the present disclosure, there is provided an anti-icing device including: an inlet guide vane installed behind an intake through which external air may be introduced, and configured to control a flow of the introduced external air; and a heating unit installed at the inlet guide vane and configured to heat the inlet guide vane such that the external air is prevented from condensing.

In the anti-icing device according to the embodiment of the present disclosure, the heating unit may be installed at an interior of the inlet guide vane.

In the anti-icing device according to the embodiment of the present disclosure, the heating unit may be a heating wire installed in an inner central portion of the inlet guide vane or a planar heating element installed on an inner wall of the inlet guide vane.

In the anti-icing device according to the embodiment of the present disclosure, the heating unit may be installed on an outer surface of the inlet guide vane.

In the anti-icing device according to the embodiment of the present disclosure, the heating unit may be a heating wire installed on the outer surface of the inlet guide vane or a planar heating element installed on the outer surface of the inlet guide vane.

In the anti-icing device according to the embodiment of the present disclosure, the anti-icing device may include: a first temperature sensor installed in the inlet guide vane or on a surface thereof and measuring temperature of the inlet guide vane; and a controller configured to automatically turn off operation of the heating unit when a measured value of the first temperature sensor exceeds a preset reference value, and automatically turn on operation of the heating unit when a measured value of the first temperature sensor is lower than or equal to the preset reference value.

In the anti-icing device according to the embodiment of the present disclosure, the anti-icing device may include: a second temperature sensor installed at the intake and measuring temperature of the external air introduced through the intake; and a controller configured to automatically turn off operation of the heating unit when a measured value of the second temperature sensor exceeds a preset reference value, and automatically turn on operation of the heating unit when a measured value of the second temperature sensor is lower than or equal to the preset reference value.

According to an embodiment of the present disclosure, there is provided a compressor including: an intake through which the external air may be introduced; and an anti-icing device installed on a flow path of the external air introduced via the intake, wherein the anti-icing device may include: an inlet guide vane installed behind the intake; and a heating unit installed at the inlet guide vane and configured to heat the inlet guide vane such that the external air is prevented from condensing.

In the compressor according to the embodiment of the present disclosure, the heating unit may be installed at an interior of the inlet guide vane.

In the compressor according to the embodiment of the present disclosure, the heating unit may be a heating wire installed in an inner central portion of the inlet guide vane or a planar heating element installed on an inner wall of the inlet guide vane.

In the compressor according to the embodiment of the present disclosure, the heating unit may be installed on an outer surface of the inlet guide vane.

In the compressor according to the embodiment of the present disclosure, the heating unit may be a heating wire installed on the outer surface of the inlet guide vane or a planar heating element installed on the outer surface of the inlet guide vane.

In the compressor according to the embodiment of the present disclosure, the compressor may include: a first temperature sensor installed in the inlet guide vane or on a surface thereof and measuring temperature of the inlet guide vane; and a controller configured to automatically turn off operation of the heating unit when a measured value of the first temperature sensor exceeds a preset reference value, and automatically turn on operation of the heating unit when the measured value of the first temperature sensor is lower than or equal to the preset reference value.

In the compressor according to the embodiment of the present disclosure, the compressor may include: a second temperature sensor installed at the intake and measuring temperature of the external air introduced through the intake; and a controller configured to automatically turn off operation of the heating unit when a measured value of the second temperature sensor exceeds a preset reference value, and automatically turn on operation of the heating unit when the measured value of the second temperature sensor is lower than or equal to the preset reference value.

According to an embodiment of the present disclosure, there is provided a gas turbine including: a compressor sucking and compressing external air; a combustor configured to mix and burn the external air compressed in the compressor with fuel; and a turbine generating power with combustion gas discharged from the combustor, wherein the compressor may include: an intake through which the external air is introduced; and an anti-icing device installed on a flow path of the external air introduced through the intake, wherein the anti-icing device may include: an inlet guide vane installed behind the intake; and a heating unit installed at the inlet guide vane and configured to heat the inlet guide vane such that the external air is prevented from condensing.

In the gas turbine according to the embodiment of the present disclosure, the heating unit may be a heating wire installed in an inner central portion of the inlet guide vane or a planar heating element installed on an inner wall of the inlet guide vane.

In the gas turbine according to the embodiment of the present disclosure, the heating unit may be a heating wire installed on an outer surface of the inlet guide vane or a planar heating element installed on the outer surface of the inlet guide vane.

In the gas turbine according to the embodiment of the present disclosure, the gas turbine may include: a first temperature sensor installed in the inlet guide vane or on a surface thereof and measuring temperature of the inlet guide vane; and a controller configured to automatically turn off operation of the heating unit when a measured value of the first temperature sensor exceeds a preset reference value, and automatically turn on operation of the heating unit when the measured value of the first temperature sensor is lower than or equal to the preset reference value.

In the gas turbine according to the embodiment of the present disclosure, the gas turbine may include: a second temperature sensor installed at the intake and measuring temperature of the external air introduced through the intake; and a controller automatically turn off operation of the heating unit when a measured value of the second temperature sensor exceeds a preset reference value, and automatically turn on operation of the heating unit when the measured value of the second temperature sensor is lower than or equal to the preset reference value.

Specific details about embodiments according to various aspects of the present disclosure are included in the following detailed description.

According to the embodiments of the present disclosure, it is possible to prevent external air introduced into the compressor from freezing and damaging the inner portion of the gas turbine.

### BRIEF DESCRIPTION OF THE DRAWINGS

FIG. 1 is a perspective view showing a partially cut gas turbine according to an embodiment of the present disclosure.
FIG. 2 is a sectional view showing a schematic structure of the gas turbine according to the embodiment of the present disclosure.
FIG. 3 is a view schematically showing a gas turbine according to the related art.
FIG. 4 is a view schematically showing a compressor equipped with an anti-icing device according to the embodiment of the present disclosure.
FIGS. 5 and 6 are views showing an example of a heating unit installed at an inlet guide vane.
FIG. 7 is a view schematically showing the anti-icing device according to another embodiment of the present disclosure.
FIG. 8 is a view schematically showing the anti-icing device according to another embodiment of the present disclosure.

### DETAILED DESCRIPTION OF THE DISCLOSURE

The present disclosure may be variously modified and may have various embodiments, so examples of which are illustrated and will be described in detail in the detailed description. However, it should be understood that the present disclosure is not limited to the embodiments which will be described hereinbelow, but various modifications, equivalents, additions and substitutions are possible, without departing from the scope and spirit of the present disclosure.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprise", "include", "have", etc., when used in this specification, specify the presence of stated features, integers, steps, operations, elements, components, and/or combinations of them but do not preclude the presence or addition of one or more other features, integers, steps, operations, elements, components, and/or combinations thereof.

Hereinbelow, exemplary embodiments of the present disclosure will be described in detail with reference to the accompanying drawings. When inserting reference numerals into the components in the respective drawings, although the same components are illustrated in the different drawings, they are described to have the same reference numeral as far as possible. Furthermore, detailed descriptions of known functions and configurations which are deemed to make the gist of the present disclosure obscure will be omitted. For the same reason, some components in the accompanying drawings may be exaggerated, omitted, or simplified.

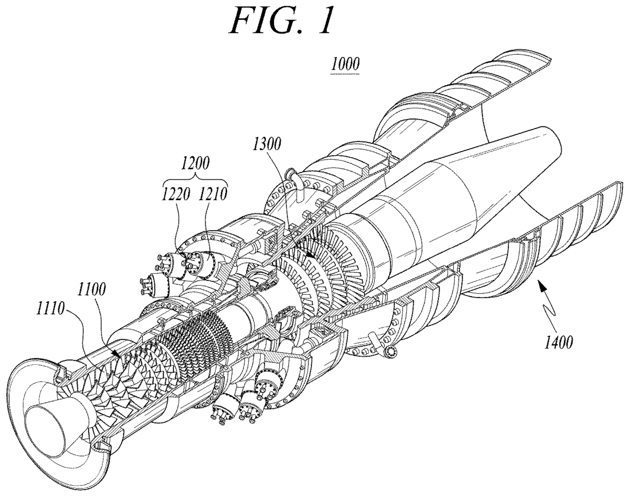

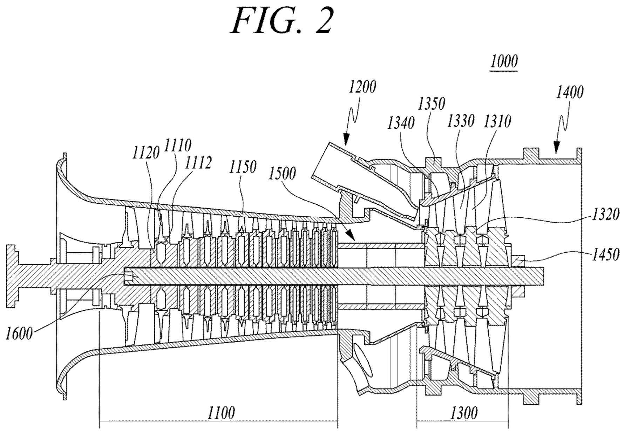

FIG. 1 is a partially cut-perspective view of a gas turbine according to an embodiment of the present disclosure. FIG. 2 is a sectional view showing an inner structure of the gas turbine according to the embodiment of the present disclosure.

As shown in FIG. 1, according to the embodiment of the present disclosure, the gas turbine 1000 includes a compressor 1100, a combustor 1200, and a turbine 1300. The compressor 1100 includes a plurality of blades 1110 installed radially. The compressor 1100 rotates the plurality of blades 1110, and air is compressed and moved due to rotation of the blades 1110. The size and installation angle of the plurality of blades 1110 may vary according to the installation position. According to the embodiment, the compressor 1100 is directly or indirectly connected to the turbine 1300, and may receive a portion of power generated by the turbine 1300 and use the power to rotate the blades 1110.

The air compressed from the compressor 1100 is moved to the combustor 1200. The combustor 1200 includes a plurality of combustion chambers 1210 arranged in a ring shape, and a fuel nozzle module 1220.

As shown in FIG. 2, according to the embodiment of the present disclosure, the gas turbine 1000 includes a housing 1010, and a diffuser 1400 is provided behind the housing 1010 to discharge combustion gas passing through the turbine. Furthermore, the combustor 1200 is arranged at front of the diffuser 1400 to receive and burn the compressed air.

Based on a front direction of air, the compressor 1100 is located at an upper stream of the housing 1010, and the turbine 1300 is located at a lower stream of the housing 1010. Furthermore, a torque tube 1500 is arranged between the compressor 1100 and the turbine 1300 as a torque transmitting member that transmits the rotational torque generated by the turbine 1300 to the compressor 1100.

The compressor 1100 includes a plurality of compressor rotor discs 1120 (e.g., 14 sheets), and each of the compressor rotor discs 1120 is fastened to each other with a tie rod 1600 not to be separated from each other in an axial direction.

Specifically, each of the compressor rotor discs 1120 is aligned in an axial direction with the tie rod 1600 of the rotating shaft passing through the central portion of the compressor rotor discs 1120. Herein, adjacent compressor rotor discs 1120 are arranged to be pressed at opposite surfaces by the tie rod 1600, thereby preventing them from being relatively rotated.

The plurality of blades 1110 is coupled to the outer circumferential surfaces of the compressor rotor discs 1120 radially. Each of the blades 1110 includes a dovetail member 1112 and is fastened to each of the compressor rotor discs 1120.

A vane (not shown) that is securely arranged at the housing is located between the rotor discs 1120. The vane is secured not to be rotated, unlike the rotor discs, and serves to align a flow of the compressed air passing through the blades 1110 of the compressor rotor discs 1120 and guide the air to the blades 1110 of the compressor rotor discs 1120 located at the lower stream.

A fastening method of the dovetail member 1112 is a tangential type or an axial type. The fastening method may be selected depending on the required structure of the common gas turbine, and may have a dovetail shape or a fir-tree shape, which is commonly known. In some cases, other fastening devices, such as keys or bolts, may be used to secure the blades to the rotor disc.

The tie rod 1600 is arranged to pass through the central portion of the plurality of compressor rotor discs 1120 and a plurality of turbine rotor discs 1320, and the tie rod 1600 may include one or a plurality of tie rods. A first end of the tie rod 1600 is fastened to an inner portion of a compressor rotor disc located at the uppermost position, and a second end of the tie rod 1600 is fastened by a fixing nut 1450.

The shape of the tie rod 1600 may have various structures according to the gas turbine, and is not necessarily limited to the shape shown in FIG. 2. In other words, as shown in the drawing, one tie rod may be shaped to pass through the center portion of the rotor discs, a plurality of tie rods may be arranged circumferentially, and mixed use thereof is possible.

Not shown in the drawings, the compressor of the gas turbine may have a vane at a position downstream of the diffuser, the vane serving as a turning vane to adjust a flow angle of a fluid to a designed flow angle, the fluid entering an entrance of the combustor after increasing the pressure thereof, and this is called a deswirler.

The combustor 1200 mixes the introduced compressed air with fuel, and burns it to generate high temperature and high pressure gas with high energy, and increases the temperature of the combustion gas to the heat resistance limit that the combustor and the turbine components can withstand by a uniform pressure combustion process.

The combustor constituting the combustion system of the gas turbine may include a plurality of combustors arranged in a housing that is shaped in a cell, and includes a burner including a fuel injection nozzle, etc., a combustor liner forming the combustion chamber, and a transition piece serving as a connecting member between the combustor and the turbine.

Specifically, the liner provides a combustion space in which fuel injected from the fuel injection nozzle is mixed with compressed air from the compressor and burned. The liner may include a flame container, providing a combustion space in which fuel mixed with air is burned, and a flow sleeve, providing an annular space. Furthermore, a fuel nozzle is coupled to a front end of the liner, and an ignition plug is coupled to a side wall of the liner.

Meanwhile, a transition piece is connected to a rear end of the liner to transfer combustion gas burned by the ignition plug, toward the turbine. An outer wall of the transition piece is cooled by the compressed air supplied from the compressor to prevent damage caused by the high temperature of the combustion gas.

To this end, the transition piece includes holes for cooling to inject air inward, and compressed air cools an inner main body through the holes and then flows toward the liner.

The above-described cooling air that has cooled the transition piece flows in the annular space of the liner, and at the outer wall of the liner, the compressed air is supplied from the outside space of the flow sleeve through the cooling holes of the flow sleeve toward the cooling air, causing a collision between the cooling air and the compressed air.

Meanwhile, the combustion gas from the combustor is supplied to the turbine 1300. The combustion gas expands and collides the rotating blades of the turbine, generating a reaction force that produces rotational torque. The rotational torque is transmitted to the compressor through the torque tube 1500, and any power exceeding that required to drive the compressor is used to drive the generator, etc.

The turbine 1300 has a structure fundamentally similar to the structure of the compressor. In other words, the turbine 1300 includes also a plurality of turbine rotor discs 1320 that are similar to the compressor rotor discs of the compressor. Therefore, each turbine rotor disc 1320 includes also a plurality of turbine blades 1310 arranged radially. The turbine blades 1310 may also be coupled to the turbine rotor discs 1320 using a dovetail method, etc. Furthermore, a turbine vane 1330 is provided between the blades 1310 of the turbine rotor discs 1320 and fixed to a turbine casing 1350 through a turbine vane carrier 1340, and control a flow direction of the combustion gas that has passed through the blades. The turbine vane carrier 1340 is equipped with at least one turbine vane 1330 and formed to be connected to the turbine casing 1350.

Meanwhile, when low-temperature, humid external air is introduced into the compressor 1100, moisture in the introduced external air may condense and freeze on a surface of a cold object in the gas turbine. If ice is formed in a fuel injection path (i.e., the flow path) of the gas turbine due to the its freezing phenomenon, it may lead to foreign object damage (FOD) and cause damage to the gas turbine. Here, the FOD refers to damage caused when foreign materials such as dust, sand, or small metal fragments enter the turbine.

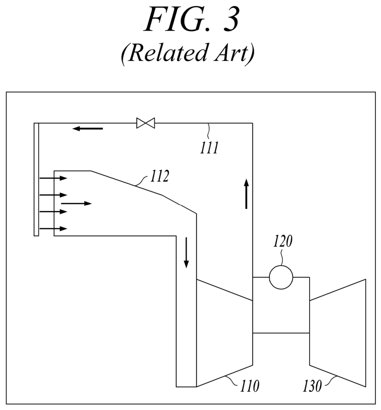

The related art to prevent the occurrence of FOD is illustrated in FIG. 3. FIG. 3 is a view schematically showing a gas turbine according to the related art.

Referring to FIG. 3, when a freezing condition is detected and meets the corresponding condition, the conventional gas turbine extracts high-temperature compressed air from a middle or lower stage of a compressor 110 through a separate extraction flow path 111. The extracted compressed air is then injected into an intake 112 located upstream of the compressor 110 and is mixed with the external air to heat the external air, thereby preventing the FOD.

The compressor 110 may correspond to the compressor 1100 of FIGS. 1 and 2 as described above, and the combustor 120 may correspond to the combustor 1200 of FIGS. 1 and 2 as described above, and the turbine 130 may correspond to the turbine 1300 of FIGS. 1 and 2 as described above, and the repeated description of the detailed configuration will be omitted.

The gas turbine of the related art generates significant noise during the process of injecting high-temperature air from the middle or rear stage of the compressor into the intake of the compressor 110, and its efficiency in preventing freezing is not substantially high. Therefore, the present disclosure provides an anti-icing device that solves these shortcomings of the related art and offers improved efficiency in preventing the FOD.

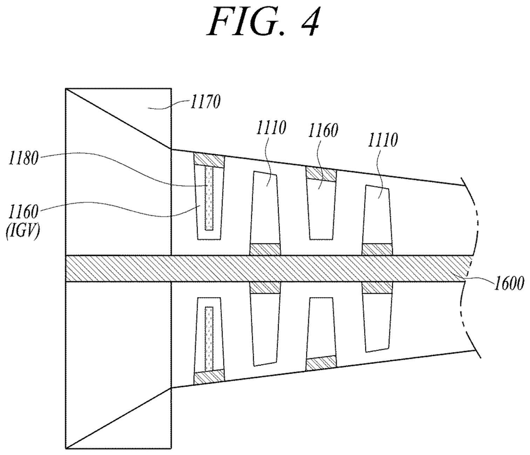

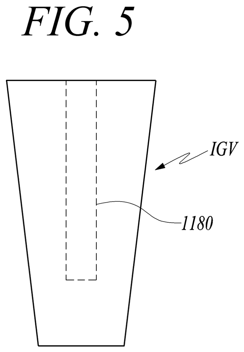

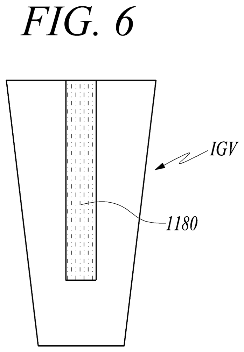

FIG. 4 is a view schematically showing a compressor including an anti-icing device according to the embodiment of the present disclosure. FIGS. 5 and 6 are views showing an example of a heating unit, which is a component of the anti-icing device, installed at the inlet guide vane.

The compressor shown in FIG. 4 is a simplified representation provided solely for describing the anti-icing device among the components of the compressor illustrated in FIG. 2.

Referring to FIG. 4, the compressor 1100 includes compressor blades 1110 installed between a plurality of compressor vanes 1160 and another plurality of compressor vanes 1160 in an adjacent stage.

The compressor blades 1110 are coupled to the outer circumferential surfaces of the compressor rotor disc 1120, and the compressor rotor discs 1120 are arranged axially with the tie rod 1600 passing through the central portions of the compressor rotor discs 1120.

An intake 1170 is installed at an entrance of the compressor 1100. The intake 1170 introduces external air into the compressor 1100.

The first compressor vane of the plurality of compressor vanes 1160, which is installed directly behind the intake 1170, is referred to as an inlet guide vane (IGV).

The angle of the inlet guide vane may be adjusted to control the flow rate and direction of the external air introduced through the intake 1170, thereby optimizing the compressor efficiency. For example, when the output load is low, the angle of the inlet guide vane may be adjusted to restrict air inflow and reduce fuel consumption, thereby increasing the efficiency. Angle adjustment of the inlet guide vane may be performed in real time using an actuator or a hydraulic system.

Meanwhile, as described above, when low temperature, humid external air is introduced into the compressor 1100 through the intake 1170, moisture contained in the introduced external air may condense on a cold surface of the inlet guide vane. This moisture may then freeze and cause damage to the gas turbine. To prevent this from occurring, the present disclosure provides a heating unit 1180 installed at the inlet guide vane, and the inlet guide vane together with the heating unit 1180 constitutes the anti-icing device.

The heating unit 1180 may include at least one of a heating wire and a planar heating element. The heating wire and the planar heating element may be heated using electrical energy supplied to them from an external source. The heating unit 1180 may be electrically connected by an electrical wire, which is disposed through the casing and may be heated by electrical energy delivered via the electrical wire. The planar heating element may be a physical metal component having a planar shape and can be heated by electrical energy. The heating unit 1180 will be described in more detail with reference to FIGS. 5-8.

As shown in FIG. 5, according to an embodiment, the heating unit 1180 may be installed inside the inlet guide vane.

In FIG. 5, the direction from the portion of the vane fixed to the casing toward the rotor may be referred to as a radially inward direction, and the opposite direction may be referred to as a radially outward direction. Also, the direction between the left and the right sides of the vane shown in FIG. 5 may be referred to as a circumferential direction.

In this case, the heating unit 1180 may be a heating wire installed in an inner central portion of the inlet guide vane. The heating wire may not be visible from outside the vane because it is installed within the interior of the vane. According to an embodiment, the heating wire may be arranged to extend radially inwardly, then horizontally in the circumferential direction, then radially outwardly toward the casing.

Alternatively, the heating unit 1180 may be a planar heating element installed on an inner wall of the inlet guide vane. The planar heating element may not be visible from outside the vane because it is installed within the interior of the vane. According to an embodiment, the planar heating element may be formed in a planar bar shape extending in the radially inward direction from the radially outer end of the vane.

As shown in FIG. 6, according to an embodiment, the heating unit 1180 may be installed on an external surface of the inlet guide vane.

In this case, the heating unit 1180 may be a heating wire arranged along the surface of the inlet guide vane. Alternatively, the heating unit 1180 may be a planar heating element installed on the surface of the inlet guide vane. The heating wire and/or the planar heating element may be visible outside the vane because they are installed external surface of the inlet guide vane. The heating wire and/or the planar heating element may be in a similar shape described in FIG. 5.

Because a planar heating element generates heat uniformly across its surface and provides obtain a wider contact area with the low temperature, humid external air, it may offer higher efficiency than a heating wire.

The anti-icing device according to the embodiment of the present disclosure as described above provides heat to both the interior and exterior of the inlet guide vane via the heating unit 1180, thereby heating the surface of the inlet guide vane. This prevents the external air introduced into the compressor 1100 from freezing on the surface of the inlet guide vane. As a result, this prevents damage to the gas turbine.

Furthermore, unlike the related art in which high-temperature air from the middle or rear stage of the compressor is injected into the intake 112 located in front of the compressor 110, the device of the present disclosure prevents freezing by directly heating the inlet guide vane. Therefore, no noise is generated from injecting high-temperature air. Furthermore, the radiant heat from the heating unit 1180 may be indirectly transferred to the low-temperature, humid external air, which collides with the inlet guide vane, in addition to the direct heat transfer. This improves the overall efficiency of preventing freezing.

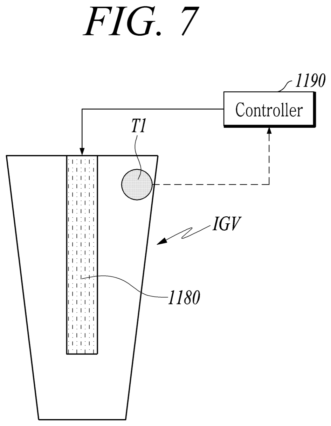

FIG. 7 is a view schematically showing the anti-icing device according to another embodiment of the present disclosure.

Referring to FIG. 7, the anti-icing device according to another embodiment of the present disclosure includes the inlet guide vane, the heating unit 1180, a first temperature sensor T1, and a controller 1190. The inlet guide vane and the heating unit 1180 are substantially the same as those of the above-described embodiment, and therefore a detailed description of these elements will be omitted.

According to the present embodiment, the first temperature sensor T1 may be installed either inside the inlet guide vane or on the surface of the inlet guide vane and measures the temperature of the inlet guide vane. The first temperature sensor T1 may be located at a portion adjacent to the radial end of the vane. The first temperature sensor T1 measures the temperature of the inlet guide vane and transmits the temperature value to the controller 1190. When the temperature value exceeds a preset reference value, the controller 1190 automatically transmits a control signal to the heating unit 1180 to turn off the operation of the heating unit 1180. Conversely, when the temperature value is at or below the preset reference value, the controller 1190 automatically sends a control signal to the heating unit 1180 to turn on the heating unit 1180.

According to an embodiment, the temperature sensor T1 may communicate with the controller 1190 via wired or wireless communication channel, which may employ any suitable communication technology. For example, the temperature sensor T1 may be connected through a wired communication line implemented within and through the casing, to which the inlet guide vane is attached. Alternatively, or in addition, the temperature sensor T1 may include a wireless communication interface, such as Wi-Fi or Bluetooth.

As an example, the controller 1190 may operate the heating unit 1180 only when the temperature of the inlet guide vane is lower than or equal to 0°C, which is low enough for ide to form on the surface, and may stop the operation of the heating unit 1180 when the temperature of the inlet guide vane rises above 0°C.

The anti-icing device according to the embodiment of the present disclosure as configured above can prevent unnecessary power consumption by turning on or off the operation of the heating unit 1180 based on the temperature of the inlet guide vane.

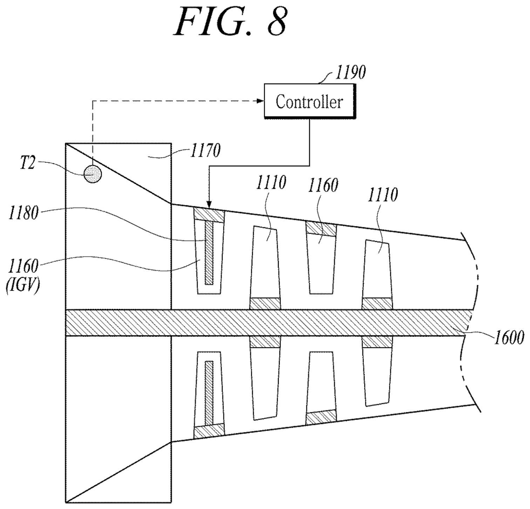

FIG. 8 is a view schematically showing the anti-icing device according to another embodiment of the present disclosure.

Referring to FIG. 8, the anti-icing device according to another embodiment of the present disclosure includes the inlet guide vane, the heating unit 1180, a second temperature sensor T2, and the controller 1190. The inlet guide vane and the heating unit 1180 are substantially the same as those in the previous embodiment, and therefore their detailed description will be omitted.

According to this embodiment, the second temperature sensor T2 is installed at the intake 1170 and measures the temperature of external air introduced through the intake 1170. The second temperature sensor T2 measures the temperature of the external air and transmits the temperature value to the controller 1190. When the temperature value exceeds a preset reference value, the controller 1190 may automatically transmit a control signal to the heating unit 1180 to turn off the operation of the heating unit 1180. Conversely, when the sensed temperature value is lower than or equal to the preset reference value, the controller 1190 may automatically transmit a control signal to the heating unit 1180 to turn on the operation of the heating unit 1180.

According to an embodiment, the temperature sensor T2 may communicate with the controller 1190 via wired or wireless communication channel, which may employ any suitable communication technology. For example, the temperature sensor T2 may be connected through a wired communication line implemented within and through the casing, to which the inlet guide vane is attached. Alternatively, or in addition, the temperature sensor T2 may include a wireless communication interface, such as Wi-Fi or Bluetooth.

As an example, the controller 1190 may operate the heating unit 1180 only when the temperature of external air is lower than or equal to 0°C, which is low enough for ice to form on the surface of the inlet guide vane, and may stop the operation of the heating unit 1180 when the sensed temperature of the external air temperature rises above 0°C.

The anti-icing device according to the embodiment of the present disclosure as configured above can prevent unnecessary power consumption by automatically turning the operation of the heating unit 1180 on or off based on the temperature of the external air introduced through the intake 1170.

Although the preferred embodiments of the present disclosure have been disclosed, those skilled in the art will appreciate that various modifications, additions, substitutions, and deletions of components are possible, without departing from the scope and spirit of the present disclosure as disclosed in the accompanying claims, and this is also included within the scope of rights of the present disclosure. Also, it is noted that any one feature of an embodiment of the present disclosure described in the specification may be applied to another embodiment of the present disclosure. Similarly, the present invention encompasses any embodiment that combines features of one embodiment and features of another embodiment.

## Claims

1. An anti-icing device comprising:
an inlet guide vane(IGV) installed behind an intake(1170) through which external air is introduced, and configured to control a flow of the introduced external air; and
a heating unit(1180) installed at the inlet guide vane and configured to heat the inlet guide vane such that the external air is prevented from condensing.

2. The anti-icing device of claim 1, wherein the heating unit(1180) is installed at an interior of the inlet guide vane(IGV).

3. The anti-icing device of claim 1 or claim 2, wherein the heating unit(1180) is a heating wire installed in an inner central portion of the inlet guide vane or a planar heating element installed on an inner wall of the inlet guide vane(IGV).

4. The anti-icing device one of claim 1 to claim 3, wherein the heating unit(1180) is installed on an outer surface of the inlet guide vane(IGV).

5. The anti-icing device one of claim 1 to claim 4, wherein the heating unit(1180) is a heating wire installed on the outer surface of the inlet guide vane or a planar heating element installed on the outer surface of the inlet guide vane(IGV).

6. The anti-icing device one of claim 1 to claim 5, further comprising:
a first temperature sensor(T1) installed in the inlet guide vane(IGV) or on a surface thereof and measuring temperature of the inlet guide vane(IGV); and
a controller(1190) configured to automatically turn off operation of the heating unit(1180) when a measured value of the first temperature sensor(T1) exceeds a preset reference value, and automatically turn on operation of the heating unit when a measured value of the first temperature sensor is lower than or equal to the preset reference value.

7. The anti-icing device one of claim 1 to claim 6, further comprising:
a second temperature sensor(T2) installed at the intake(1170) and measuring temperature of the external air introduced through the intake; and
a controller(1190) configured to automatically turn off operation of the heating unit(1180) when a measured value of the second temperature sensor(T2) exceeds a preset reference value, and automatically turn on operation of the heating unit when a measured value of the second temperature sensor is lower than or equal to the preset reference value.

8. A compressor comprising:
an intake(1170) through which the external air is introduced; and
an anti-icing device installed on a flow path of the external air introduced via the intake,
wherein the anti-icing device comprises:
an inlet guide vane(IGV) installed behind the intake; and
a heating unit(1180) installed at the inlet guide vane and configured to heat the inlet guide vane such that the external air is prevented from condensing.

9. The compressor of claim 8, wherein the heating unit(1180) is installed at an interior of the inlet guide vane(IGV).

10. The compressor of claim 8 or claim 9, wherein the heating unit(1180) is a heating wire installed in an inner central portion of the inlet guide vane or a planar heating element installed on an inner wall of the inlet guide vane(IGV).

11. The compressor one of claim 8 to claim 10, wherein the heating unit(1180) is installed on an outer surface of the inlet guide vane(IGV).

12. The compressor one of claim 8 to claim 11, wherein the heating unit(1180) is a heating wire installed on the outer surface of the inlet guide vane or a planar heating element installed on the outer surface of the inlet guide vane(IGV).

13. The compressor one of claim 8 to claim 12, further comprising:
a first temperature sensor(T1) installed in the inlet guide vane(IGV) or on a surface thereof and measuring temperature of the inlet guide vane(IGV); and
a controller(1190) configured to automatically turn off operation of the heating unit when a measured value of the first temperature sensor(T1) exceeds a preset reference value, and automatically turn on operation of the heating unit when the measured value of the first temperature sensor is lower than or equal to the preset reference value.

14. The compressor one of claim 8 to claim 13, further comprising:
a second temperature sensor(T2) installed at the intake(1170) and measuring temperature of the external air introduced through the intake; and
a controller(1190) configured to automatically turn off operation of the heating unit when a measured value of the second temperature sensor(T2) exceeds a preset reference value, and automatically turn on operation of the heating unit when the measured value of the second temperature sensor is lower than or equal to the preset reference value.
